# EUROPEAN PATENT SPECIFICATION

(11) **EP 2 125 306 B1**
(45) Date of publication and mention of the grant of the patent: **14.07.2010**
(21) Application number: 07866587.4
(22) Date of filing: 27.12.2007
(51) Int. Cl.: B26D 7/26, B26F 1/44

(54) **APPARATUS AND METHOD FOR RUBBER-COATING OF CUTTING DIES**
VORRICHTUNG UND VERFAHREN ZUM ÜBERZIEHEN VON STANZWERKZEUGEN MIT GUMMI
DISPOSITIF ET PROCÉDÉ DE REVÊTEMENT DE CAOUTCHOUC DE MATRICES D'ESTAMPAGE

(30) Priority: 29.12.2006 IT FI20060342
(43) Date of publication of application: 02.12.2009
(73) Proprietor: FOLDYN S.R.L, 50010 Badia a Settimo Scandicci (IT)
(72) Inventor: LOMBARDO, Paolo, I-50018 Scandicci (IT)
(74) Representative: Gervasi, Gemma
(86) International application number: PCT/IB2007/004112
(87) International publication number: WO 2008/081299

(56) References cited:
- DE-C1- 3 630 287
- US-A- 2 821 871
- US-A- 4 802 936
- US-A- 5 275 076
- US-A1- 2005 005 664

## Description

### FIELD OF THE INVENTION

The present invention relates to the field of machine tool accessories.

### STATE OF THE ART

As known, cutting dies are devices which allow to cut materials in sheet form into different shapes.

The cutting die essentially consists of a strip of metal (called rule) mounted on a specific flat or curved support in which - for example by means of specific numeric control laser cutters - the seat for said metal strip is engraved following the contours of the desired shape. After having been engraved, the metal strip (the so-called rule) is inserted, again automatically, so that its cutting edge perpendicularly protrudes from the support. If said support is not flat, the rule will protrude from its convex side.

By placing any material in sheets over the rule and exerting an appropriate pressure on it, e.g. with a flat press in the case of a flat support or with a cylinder in case of a curved support, it is possible to cut out a shape in the sheet coinciding with the surface enclosed by the rule.

However, since due to the pressure the cut-out shapes would tend to sink with respect to the rule making them difficult to collect, a strip of elastic material, e.g. rubber, is arranged on the rule support, along the rule itself and on both sides thereof, which after performing the cut moves the cut piece upwards thus allowing an easy manual or mechanical collection thereof.

All the cutting die construction operations are automatically performed without the intervention of manual operators, except for the rubber application which is instead manually performed by firstly applying a layer of adhesive along the internal and external edge of the rule, and then making a rubber band or thread of the desired thickness and elasticity adhere to it.

It is apparent that this operation, employing an operator, is long-lasting and expensive and it is also apparent the advantage which would be obtained if this operation could be automated, thus automating the entire cutting die production process from the initial laser cutting of the support to indeed the rubber coating. Furthermore, the automatic die cutting machines of the known art, which may produce even up to 10,000/12,000 sheets/hour, in order to prevent the formation of detrimental air cushions, which could displace the sheet to be die-cut thus loosing the necessary die cutting accuracy, must ensure that whenever the pressing bed of the die cutting machine is lowered onto the cutting die, all the air which is created by the movement of the bed itself is expelled as rapidly as possible. This does not occur when the rubber forms a double barrier and the available solution, in these cases, is only to reduce the die cutting machine speed, sometimes even by 40%.

In the field of the production of cutting dies it is also known to use plotters, devices essentially consisting of a trolley capable of moving on a flat surface according to Cartesian coordinates (x, y), said trolley being equipped with a specific tool which allows to perform the desired operations, e.g. a pen (for printing), a blade (for carving), a milling cutter (for engraving), etc.

In this manner, by controlling the tool movements along the Cartesian axes, it is possible to draw lines, spots, curves, etc. with it.

Specifically, there are known plotters in which the tool consists of a (hot or cold) glue gun which are thus capable of distributing the glue on the concerned surface in points determined by the operator and thus apply the glue needed for the step of rubber-coating.

### SUMMARY OF THE INVENTION

The present invention relates to a device and a method which allow the automatic rubber-coating of an either flat or curved cutting die and which may possibly be associated to a plotter or to a tooled robot arm for automatic glue application or handling.

### BRIEF DESCRIPTION OF THE DRAWINGS

Figure 1 diagrammatically shows a perspective view of the device according to the invention.
Figure 2 diagrammatically shows a plan view of the device according to the invention fitted on the arm of a plotter.

### DETAILED DESCRIPTION OF THE INVENTION

The present invention allows to overcome the aforesaid problem in virtue of a device and a method capable of automatically distributing the rubber or similar material, making it adhere to the cutting die support along the entire rule and on both sides thereof, and so that the previously described problems are solved, specifically using separate rubber plugs adapted to be compressed more than an equivalent rubber surface cut into a strip according to the traditional method. The advantage which derives therefrom is a higher elasticity to the benefit of the sheet lifting and, moreover, the high compression capacity of the rubber plug solves the problem of overpressure which the traditional rubber in strips creates on soft material sheet, such as for example corrugated cardboard, precisely due to the limited compression power.

The device according to the invention comprises elastic material containing and distributing means, preferably in the form of cylindrical section segments or in the form of ribbon; cutting and positioning means of portions of said elastic material and supporting and handling means of said elastic material containing and distributing means and of said cutting and positioning means of portions of said elastic material.

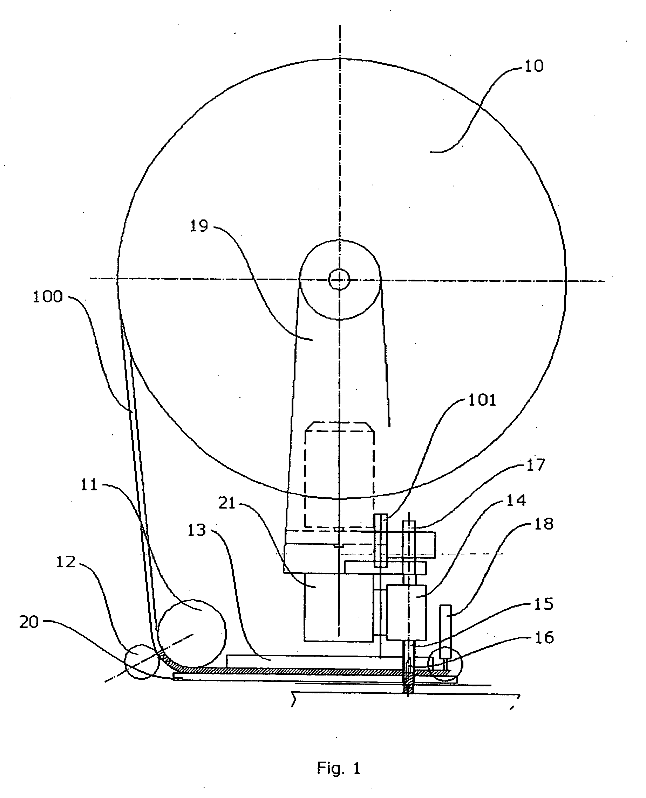

Figure 1 shows a preferred but not limiting embodiment of the device according to the present invention. Said elastic material containing and distributing means comprise at least one first distributing reel 10 loaded with an elastic material strip 100 with which the cutting die will be rubber-coated and at least one applicator of said elastic material strip on a plane perpendicular to that of said first distributing reel, comprising at least one feeding roller 11 and at least one counter roller 12, preferably coated with non-slip material, e.g. rubber, and associated to appropriate handling means 102, or comprising at least two feeding belts, fitted in front of each other on opposite sides with respect to the said elastic material and along the parallel sides orthogonal to the sliding plane, said belts being preferably coated with non-slip material, e.g. rubber, and associated to appropriate handling means. Said cutting and positioning means of portions of said elastic material comprise a perforating template 13; a perforating device 14 equipped with at least one hollow tip 15 and corresponding handling means 101 in a direction orthogonal to the plane; extraction means of the material cut by said perforating device 14 and collection and disposal means 18 of possible machining residues. Said hollow tip may have a cylindrical section or any other appropriate section for making elastic material plugs for rubber-coating cutting dies having the required shape. In a first preferred embodiment, said extraction means of the material cut by said perforating device 14 comprise an extractor 16 consisting of a cylinder freely sliding within said hollow tip and corresponding handling means 17 in a direction perpendicular to the cutting die support. Furthermore, said collection and disposal means 18 of possible machining residues comprise a so-called scrap-shearing device associated to an appropriate suction system. Alternatively, said hollow tip with its perforating advancement reaches the counter bed underneath and forms the rubber plug therein, it is then lifted to allow the rubber ribbon to advance. As the hollow tip is lifted, the formed rubber plug would tend to be lifted along with the hollow tip itself but this does not occur in virtue of a fixed cylindrical pin inside said hollow tip which forces the rubber plug to remain inside the rubber ribbon while the hollow tip is being lifted. The rubber ribbon may thus advance by one step, with the formed rubber plug therein, which will be thus extracted and positioned on the cutting die during the subsequent step. The cylindrical extractor is positioned at an appropriate distance, e.g. at a distance of two steps, from the hollow tip in the advancement direction of the rubber.

In a second preferred embodiment, said extraction means of the material cut by said perforating device 14 comprise a second reel for recovering the scrap rubber strip.

Preferably, the device according to the present invention comprises a bearing support 19, 20 possibly equipped with anchoring means to the movable arm of a plotter. In a further embodiment of the device according to the present invention, indeed, it may be integrated, specifically, with the arm of a plotter equipped for automatic gluing, so as to make an automatic cutting die rubber-coating apparatus.

In other preferred embodiments of the device according to the present invention, said elastic material containing and distributing means and said cutting and positioning means of portions of said elastic material may be implemented so as to manage elastic materials of different shapes and also in fluid and liquid form.

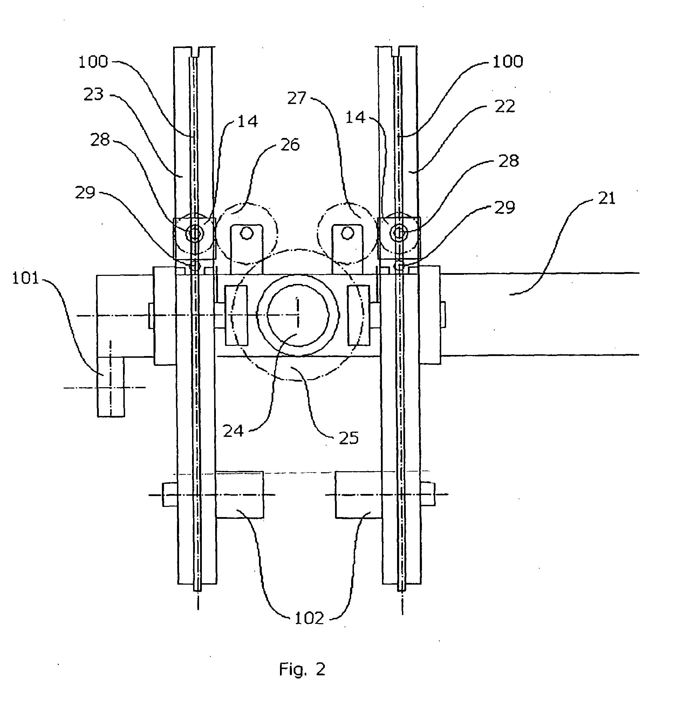

Figure 2 shows the device according to the present invention integrated with the arm 21 of a automatic gluing plotter equipped with an appropriate glue applying gun 101. In this specific embodiment, there are two reels 22, 23 equipped with a motor 24 associated to appropriate means 25, 26, 27 distributing the rotary motion thereof to said perforating device 14 equipped with the hollow tip 15. Preferably, said appropriate means 25, 26, 27 distributing the rotary motion comprise toothed wheels and drive shafts. Said hollow tip 15 is associated in turn to an extractor cylinder 16 and both are associated to corresponding control and handling cylinders 28, 29. Finally, there are appropriate collection and disposal means 18 of possible machining residues, preferably made by means of a so-called scrap-shearing device associated to an appropriate suction system.

During the operation of the device according to the present invention, in the preferred embodiment described in accompanying figure 2, the arm of the plotter, appropriately guided by a numeric control system, deposits an appropriate layer of glue on the cutting die support along the entire rule and on both sides thereof. Correspondingly, the device according to the present invention, also integral with said arm of the plotter, automatically deposits the elastic material strip 100 with which to rubber-coat the cutting die, which strip is unwound from said first reel 10, by effect of the action of said at least one feeding roller 11 and at least one counter roller 12, actuated by corresponding handling means 102. Said strip is applied over the glue previously deposited by the plotter and is then cut into a sequence of small cylinder-shaped plugs by effect of the action of said perforating template 13 and of said perforating device 14 equipped with the hollow tip 15 actuated by corresponding handling means 101. At this point, said extraction means of the material cut by said hollow tip, preferably made using an extractor cylinder 16 associated to the corresponding control and handling cylinder 28, correctly place the cylindrical plug onto the cutting die support so that it is adjacent to the rule of the cutting die itself. Subsequently, said collection and disposal means 18 of possible machining residues, preferably made by a so-called scrap-shearing device associated to an appropriate suction system, clean the cutting die from possible scrap produced during the step of cutting the aforesaid plugs.

The above-described operations are supervised and managed by an appropriate computerized control system which manages the displacements of the arm of said plotter and of the various components of the device according to the present invention.

## Claims

1. A device for rubber-coating cutting dies consisting of a rule mounted on a flat or curved support, the device comprising: means for containing and distributing elastic material (100) such as rubber strips and ribbons; means for cutting and positioning portions of said elastic material, associated to said means for containing and distributing elastic material and adapted to place said elastic material on the cutting die support along the entire rule and on both sides thereof; means for supporting and handling said means for containing and distributing elastic material and said means for cutting and positioning portions of said elastic material..

2. A device according to claim 1, **characterized in that** said elastic material containing and distributing means comprise at least one first distributing reel (10) loaded with an elastic material strip (100) with which the cutting die will be rubber-coated and at least one applicator of said elastic material strip on a plane perpendicular to that of said first distributing reel.

3. A device according to claim 2, **characterized in that** said at least one applicator comprises at least one feeding roller (11) and at least one counter roller (12) associated to appropriate handling means (102).

4. A device according to claim 2, **characterized in that** said at least one applicator comprises at least two feeding belts, fitted in front of each other on opposite sides with respect to the said elastic material and along the parallel sides orthogonal to the sliding plane, said belts being preferably associated to appropriate handling means.

5. A device according to claims 1-4, **characterized in that** said cutting and positioning means of portions of said elastic material comprise a perforating template (13), a perforating device (14) and corresponding handling means (101) in a direction orthogonal to the plane of the cutting die support; extraction means of the material cut by said perforating device (14) and collection and disposal means (18) of possible machining residues.

6. A device according to claim 5, **characterized in that** said extraction means of the material cut by said perforating device (14) comprise an extractor (16) consisting of a cylinder freely sliding within said hollow tip and corresponding handling means (17) in a direction perpendicular to the plane of the cutting die support.

7. A device according to claim 5, **characterized in that** said extraction means of the material cut by said perforating device (14) comprise a fixed cylindrical pin inside said hollow tip.

8. A device according to claim 5, **characterized in that** said extraction means of the material cut by said perforated device (14) comprise a second reel for recovering the scrap rubber strip.

9. A device according to claims 1-8, **characterized in that** it comprises a bearing support (19,20).

10. A device according to claim 1-9, **characterized in that** it comprises an appropriate control system which manages and controls the various component parts thereof.

11. A plotter apparatus **characterized in that** at least one of said movable arms comprises at least one device for automatically rubber-coating cutting dies according to claims 1-10.

12. An apparatus according to claim 11, **characterized in that** at least one of the movable arms comprises: at least one glue applying gun (101); two distributing reels (22, 23) of elastic material for rubber-coating cutting dies; at least one motor (24) associated to both said distributing reels (22, 23); at least one perforating device (14), equipped with a hollow tip (15), for each of said distributing reels (22, 23); appropriate means (25, 26, 27) distributing the rotary motion of said at least one motor (24); at least one extractor cylinder (16) associated to said at least one hollow tip (15); at least one control and handling cylinder (28, 29) associated to said at least one hollow tip (15) and to at least one said extractor cylinder (16); collection and disposal means (18) of possible machining residues.

13. A method for automatically rubber-coating cutting dies consisting of a rule mounted on a flat or curved support, the method comprising the following steps:
distributing elastic material such as rubber strips and ribbons on the cutting die support, cutting said elastic material and positioning said elastic material on said cutting die support.

14. A method according to claim 13, **characterized in that** said step of cutting said elastic material is such to make separate rubber plugs.

15. A method according to claims 13-14, **characterized in that** it comprises a further step of recovering the machining residue elastic material.

## Patentansprüche

1. Vorrichtung zur Gummibeschichtung von Stanzwerkzeugen, bestehend aus einem Schneidlineal, das auf einem ebenen oder gekrümmten Support befestigt ist, wobei diese Vorrichtung umfasst: Mittel zur Aufnahme und zum Verteilen von elastischem Material (100) wie beispielsweise Gummistreifen und -bändern, Mittel zum Stanzen und Positionieren von Abschnitten des genannten elastischen Materials, welche mit den genannten Mitteln zur Aufnahme und zum Verteilen des elastischen Materials verbunden sind und dergestalt ausgelegt sind, dass sie das genannte elastische Material auf dem Support für das Stanzwerkzeug längs des gesamten Schneidlineals und auf dessen beiden Seiten aufbringen, Mittel zum Halten und zur Betätigung der genannten Mittel zur Aufnahme und zum Verteilen des elastischen Materials und der genannten Mittel zum Stanzen und Positionieren von Abschnitten des genannten elastischen Materials.

2. Vorrichtung nach Anspruch 1, **dadurch gekennzeichnet, dass** die genannten Mittel zur Aufnahme und zum Verteilen des elastischen Materials mindestens eine erste Verteilertrommel (10) umfasst, welche mit einem Streifen elastischen Materials (100) gefüllt ist, mit welchem die Gummibeschichtung des Stanzwerkzeugs erfolgt, sowie mindestens ein Applikationsgerät für den genannten Streifen elastischen Materials auf einer Ebene rechtwinklig zu der genannten ersten Verteilertrommel.

3. Vorrichtung nach Anspruch 2, **dadurch gekennzeichnet, dass** das genannte mindestens eine Applikationsgerät mindestens eine Zuführwalze (11) und mindestens eine Gegendruckwalze (12) umfasst, die mit geeigneten Betätigungsmitteln (102) verbunden sind.

4. Vorrichtung nach Anspruch 2, **dadurch gekennzeichnet, dass** das genannte mindestens eine Applikationsgerät mindestens zwei Zuführriemen umfasst, welche auf gegenüber liegenden Seiten in Bezug auf das genannte elastische Material und längs der parallelen Seiten orthogonal zur Gleitebene voreinander befestigt sind, wobei die genannten Riemen vorzugsweise mit geeigneten Betätigungsmitteln verbunden sind.

5. Vorrichtung nach Anspruch 1 - 4, **dadurch gekennzeichnet, dass** die genannten Stanz- und Positioniermittel für Abschnitte des genannten elastischen Materials umfassen: eine Perforierschablone (13), eine Perforiervorrichtung (14) und entsprechende Betätigungsmittel (101) in einer Richtung orthogonal zur Ebene des Stanzwerkzeugsupports, Entnahmemittel für das von der genannten Perforiervorrichtung (14) gestanzte Material und Mittel zum Aufsammeln und Beseitigen (18) von möglichen Bearbeitungsrückständen.

6. Vorrichtung nach Anspruch 5, **dadurch gekennzeichnet, dass** die genannten Entnahmemittel für das von der genannten Perforiervorrichtung (14) gestanzte Material eine Entnahmevorrichtung (16), welche aus einem in der genannten Hohlspitze frei gleitenden Zylinder besteht, und entsprechende Betätigungsmittel (17) in einer Richtung rechtwinklig zur Ebene des Stanzwerkzeugsupports umfassen.

7. Vorrichtung nach Anspruch 5, **dadurch gekennzeichnet, dass** die genannten Entnahmemittel für das von der genannten Perforiervorrichtung (14) gestanzte Material im Innern der genannten Hohlspitze einen festsehenden Zylinderstift umfassen.

8. Vorrichtung nach Anspruch 5, **dadurch gekennzeichnet, dass** die genannten Entnahmemittel für das von der genannten Perforiervorrichtung (14) gestanzte Material eine zweite Trommel zur Rückgewinnung des Verschnitts an Gummistreifen umfasst.

9. Vorrichtung nach Anspruch 1 - 8, **dadurch gekennzeichnet, dass** sie einen tragenden Support (19, 20) umfasst.

10. Vorrichtung nach Anspruch 1 - 9, **dadurch gekennzeichnet, dass** sie ein geeignetes Steuerungssystem umfasst, welches ihre verschiedenen Bauteile handhabt und steuert.

11. Registriergerät, **dadurch gekennzeichnet, dass** mindestens einer der genannten beweglichen Arme mindestens eine Vorrichtung zum automatischen Gummibeschichten von Stanzwerkzeugen nach den Ansprüchen 1 - 10 umfasst.

12. Apparatur nach Anspruch 11, **dadurch gekennzeichnet, dass** mindestens einer der beweglichen Arme umfasst: mindestens eine Leimauftragspritze (101), zwei Verteilertrommeln (22, 23) für das elastische Material zur Gummibeschichtung von Stanzwerkzeugen, mindestens einen Motor (24), der mit den beiden genannten Verteilertrommeln (22, 23) verbunden ist, mindestens eine Perforiervorrichtung (14), die mit einer Hohlspitze (15) für jede der genannten Verteilertrommeln (22, 23) ausgerüstet ist, geeignete Mittel (25, 26, 27), welche die Drehbewegung des genannten mindestens einen Motors (24) aufteilen; mindestens einen Entnahmezylinder (16), der mit der genannten mindestens einen Hohlspitze (15) verbunden ist, mindestens einen Steuer und Betätigungszylinder (28, 29), der mit der genannten mindestens einen Hohlspitze (15) und mit mindestens einem genannten Entnahmezylinder (16) verbunden ist, und Mittel zum Auffangen und Beseitigen (18) von möglichen Bearbeitungsrückständen.

13. Verfahren zur automatischen Gummibeschichtung von Stanzwerkzeugen, bestehend aus einem Schneidlineal, das auf einem ebenen oder gekrümmten Support befestigt ist, wobei dieses Verfahren die folgenden Schritte umfasst: Verteilen des elastischen Materials wie beispielsweise Gummistreifen und -bänder auf dem Support für das Stanzwerkzeug, Stanzen des genannten elastischen Materials und Positionieren des genannten elastischen Materials auf dem genannten Stanzwerkzeugsupport.

14. Verfahren nach Anspruch 13, **dadurch gekennzeichnet, dass** der genannte Schritt des Stanzens des genannten elastischen Materials auf das Herstellen von einzelnen Gummistopfen ausgelegt ist.

15. Verfahren nach den Ansprüchen 13 - 14, **dadurch gekennzeichnet, dass** es den weiteren Schritt der Rückgewinnung von Bearbeitungsrückständen an elastischem Material umfasst.

## Revendications

1. Dispositif destiné à appliquer un revêtement de caoutchouc sur des outils de découpage constitués d'une règle sur un support plat ou incurvé, le dispositif comprenant : des moyens destinés à contenir et distribuer un matériau élastique (100) tel que des bandes et des rubans de caoutchouc ; des moyens destinés à couper et positionner des parties dudit matériau élastique, associés auxdits moyens destinés à contenir et distribuer un matériau élastique et adaptés pour placer ledit matériau élastique sur le support d'outil de coupe le long de la règle entière et sur les deux côtés de celle-ci ; des moyens destinés à supporter et manipuler lesdits moyens destinés à contenir et distribuer un matériau élastique et lesdits moyens destinés à couper et positionner des parties dudit matériau élastique.

2. Dispositif selon la revendication 1, **caractérisé en ce que** lesdits moyens destinés à contenir et distribuer un matériau élastique comprennent au moins une première bobine de distribution (10) chargée avec une bande de matériau élastique (100) avec laquelle un revêtement de caoutchouc sera appliqué sur l'outil de découpage et au moins un applicateur de ladite bande de matériau élastique sur un plan perpendiculaire à celui de ladite première bobine de distribution.

3. Dispositif selon la revendication 2, **caractérisé en ce que** ledit au moins un applicateur comprend au moins un rouleau d'alimentation (11) et au moins un contre-rouleau (12) associé à des moyens de manipulation appropriés (102).

4. Dispositif selon la revendication 2, **caractérisé en ce que** ledit au moins un applicateur comprend au moins deux courroies d'alimentation, installées l'une en face de l'autre sur des côtés opposés par rapport audit matériau élastique et le long des côtés parallèles orthogonaux au plan de coulissement, lesdites courroies étant de préférence associées à des moyens de manipulation appropriés.

5. Dispositif selon les revendications 1 à 4, **caractérisé en ce que** lesdits moyens destinés à couper et positionner des parties dudit matériau élastique comprennent un gabarit de perforation (13), un dispositif de perforation (14) et des moyens de manipulation correspondants (101) dans une direction orthogonale au plan du support d'outil de coupe ; des moyens d'extraction du matériau coupé par ledit dispositif de perforation (14) et des moyens de collecte et d'élimination (18) d'éventuels résidus d'usinage.

6. Dispositif selon la revendication 5, **caractérisé en ce que** lesdits moyens d'extraction du matériau coupé par ledit dispositif de perforation (14) comprennent un extracteur (16) constitué d'un cylindre coulissant librement à l'intérieur dudit embout creux et des moyens de manipulation correspondants (17) dans une direction perpendiculaire au plan du support d'outil de coupe.

7. Dispositif selon la revendication 5, **caractérisé en ce que** lesdits moyens d'extraction du matériau coupé par ledit dispositif de perforation (14) comprennent une tige cylindrique fixe à l'intérieur dudit embout creux.

8. Dispositif selon la revendication 5, **caractérisé en ce que** lesdits moyens d'extraction du matériau coupé par ledit dispositif de perforation (14) comprennent une seconde bobine pour récupérer des chutes de bande de caoutchouc.

9. Dispositif selon les revendications 1 à 8, **caractérisé en ce qu'**il comprend un support d'appui (19, 20).

10. Dispositif selon la revendication 1 à 9, **caractérisé en ce qu'**il comprend un système de commande approprié qui gère et commande ses diverses parties composantes

11. Appareil traceur **caractérisé en ce qu'**au moins un desdits bras mobiles comprend au moins un dispositif destiné à appliquer automatiquement un revêtement de caoutchouc sur des outils de découpage selon les revendications 1 à 10.

12. Appareil selon la revendication 11, **caractérisé en ce qu'**au moins un des bras mobiles comprend : au moins un pistolet d'application de colle (101) ; deux bobines de distribution (22, 23) de matériau élastique pour appliquer un revêtement de caoutchouc sur des outils de découpage ; au moins un moteur (24) associé aux deux dites bobines de distribution (22, 23) ; au moins un dispositif de perforation (14), équipé d'un embout creux (15), pour chacune desdites bobines de distribution (22, 23) ; des moyens appropriés (25, 26, 27) distribuant le mouvement rotatif dudit au moins un moteur (24) ; au moins un cylindre extracteur (16) associé audit au moins un embout creux (15) ; au moins un cylindre de commande et de manipulation (28, 29) associé audit au moins un embout creux (15) et audit au moins un cylindre extracteur (16) ; des moyens de collecte et d'élimination (18) d'éventuels résidus d'usinage.

13. Procédé pour appliquer automatiquement un revêtement de caoutchouc sur des outils de découpage constitués d'une règle sur un support plat ou incurvé, le procédé comprenant les étapes suivantes consistant à : distribuer un matériau élastique, tel que des bandes et des rubans de caoutchouc, sur le support d'outil de coupe, couper ledit matériau élastique et positionner ledit matériau élastique sur ledit support d'outil de coupe.

14. Procédé selon la revendication 13, **caractérisé en ce que** ladite étape consistant à couper ledit matériau élastique est telle à réaliser des pastilles de caoutchouc séparées.

15. Procédé selon les revendications 13 à 14, **caractérisé en ce qu'**il comprend une étape supplémentaire consistant à récupérer les résidus d'usinage de matériau élastique.
